# EUROPEAN PATENT SPECIFICATION

(11) **EP 0 494 684 B1**
(45) Date of publication and mention of the grant of the patent: **11.06.1997**
(21) Application number: 92100346.3
(22) Date of filing: 10.01.1992
(51) Int. Cl.: G06K 19/00, G06K 19/06, B42D 15/10

(54) **Ic card and a method for manufacturing the same**
IC-Karte und Verfahren zur Herstellung derselben
Carte à circuits intégrés et procédé pour sa production

(30) Priority: 10.01.1991 JP 334/91
(43) Date of publication of application: 15.07.1992
(73) Proprietor: NEC CORPORATION, Tokyo (JP)
(72) Inventor: Izumi, Atsuhiko, c/o NEC Corporation, Minato-ku, Tokyo (JP); Suzuki,Teruo, c/o NEC Engineering Ltd, Minato-ku, Tokyo (JP)
(74) Representative: Glawe, Delfs, Moll & Partner

(56) References cited:
- EP-A- 0 071 255
- EP-A- 0 216 366
- EP-A- 0 231 090
- EP-A- 0 426 406
- DE-A- 3 639 630

## Description

### BACKGROUND OF THE INVENTION

### Field of the Invention

The present invention relates to a structure and a manufacturing method of an IC card and more particularly, to an IC card which has built-in a plurality of IC devices such as memories and a microcomputer and a spacer member for reinforcement arranged in the cavity of its interior.

### Description of the Prior Art

In general, an IC card is constructed by arranging memories and microprocessors in depressions of a thin plastic plate and a connecting terminal on its exterior. Since it has a larger storage capacity and is more difficult to forge compared with a magnetic card, an IC card is expected to be in wide use as a credit card, a card for recording medical history of a patient in the hospital, or the like. For an IC card it has been proposed to have a thickness of arround 1 mm. In order to restrict the thickness to within 1 mm, the IC card is to be manufactured by forming depressions for accommodating IC chips in a thin plastic plate, and filling in the cavity with a resin after accommodating IC chips or the like in these depressions. Furthermore, a terminal for external connection is provided on the surface of the plastic plate.

However, the IC chips buried in the plastic plate as described in the above have a possibility of being damaged since the plastic plate is subjected to a repetitive bending stress every time when the IC card is inserted to the card reader. To cope with the situation, there have been adopted such techniques as to bury the IC chips nearer to the edge parts of the plastic plate where they are less affected by the bending of the plate and to arrange a cushioning material in the periphery of the IC chips for absorbing the bending stress (see Japanese Patent Laid Open No. 61-53096).

On the other hand, the general trend is to make a widespread use of IC cards by developing multifunctional IC cards that include not only memories but also a micro-computer. The multifunctional IC cards of this kind are finding their way from the use in accommodating application softwares such as electronic calculators and electronic notebooks to the use in external memory devices such as portable word processors.

Differing from the IC cards (mostly memory cards) proposed in the early stage, these multifunctional IC cards are equipped with a connector for inserting into the connector of an IC card reader. Therefore, there is no need for reducing the thickness of the IC cards, as was required for the IC cards in the early stage, so that the thickness needs only be of substantially the same order as that of the IC device packages.

Namely, such a multifunctional IC card includes a module mounting a plurality of IC devices and having printed circuits formed on the surface thereof, a frame member arranged on substantially the same plane as that of the module surrounding the module for reinforcing the mechanical strength of the module, a spacer member that is arranged in vacant portions on the surface of the module where no IC devices are mounted and occupy in these vacant portions spaces with substantially the same height as those of the IC devices, and a thin housing member which covers from the outside the module, the frame member, and the spacer member, and has a structure in which a connector on the IC reader side is connected to the end parts of the printed circuits of the module via a slit provided on one end of the housing member.

Although the multifunctional IC card has a high resistance to bending stress or impact compared with the conventional IC card (memory card) because of its greater thickness, the end parts of the printed circuits that are led out to the edge part of the housing member tends to be subjected to the bending stress or the impact force. The spacer member consists of a reinforced plastic with relatively high rigidity which enhances the resistance to a stress applied in the direction of the module surface, and is effective in preventing the breakage of the end parts of the printed circuits. However, the space member according to the prior art is formed by combining spacer pieces for each type of IC card in response to the arrangement of the IC devices at various locations on the module. Therefore, it was necessary to prepare metallic mold for manufacture of the spacer member for each type of IC card or design the shape and the arrangement of the spacer pieces for each type of the card. Although a technique is adopted to standardize to some extent the shapes of the openings to be formed in the spacer member by correspondingly standardizing to certain degree the IC devices that are mounted on the module, these openings are provided on the presumption that they are arranged additionally in response to the IC devices that are actually mounted on the module so that the positional relation-ship between these openings and the mounted IC devices requires an eventual fine adjustment.

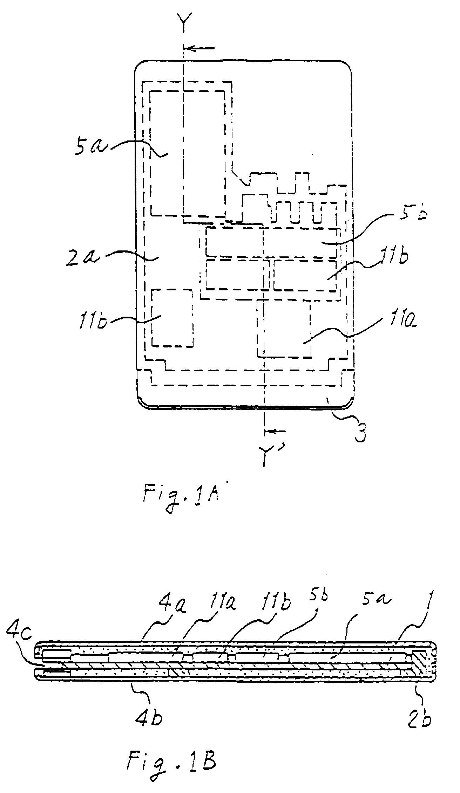

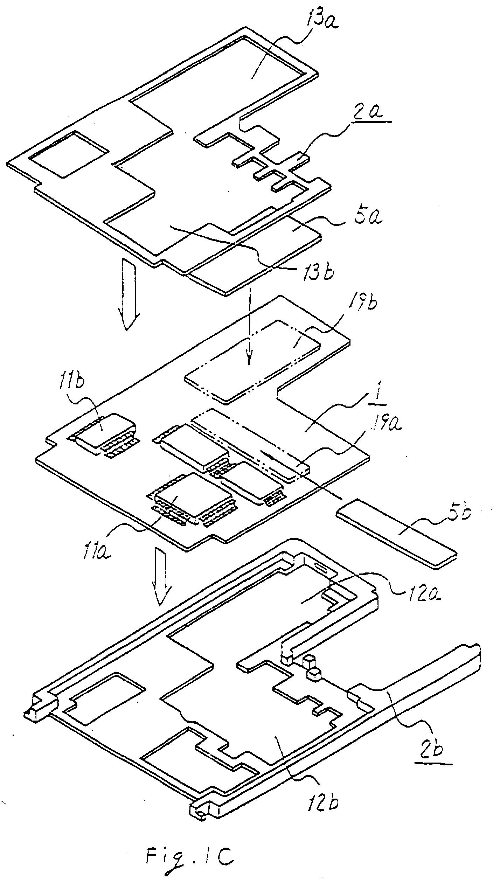

An IC card of the aforementioned type, as defined in the preamble of claim 1, will be next described with reference to Fig. 1A to Fig. 1C of the drawings. An IC card is constructed by stacking a module 1 having printed circuits on the surface thereof and has a plurality of IC devices lla and llb such as memories and a microprocessor, a frame member 2b for reinforcing the mechanical strength of the module 1, and a spacer member 2a which fills the areas not occupied by the IC devices 11a and 11b in the upper space of the module 1 to a height substantially equal to that of the IC devices, then covering the laminate with housing members 4a and 4b from above and from below. The indentations in the thickness direction of the frame member 2b have the same size as the outside size of the module 1 so as to be able to accommodate the module 1 in it. A printed circuit layer (not shown) at one end of the module 1 extends from the inside of the card toward a slit 4c formed by the housing members 4a and 4b, and forms via the hole 4c a connector terminal between a connector on the side of an IC card reading head (not shown) to which the card is inserted.

To simplify the description, it will be assumed in the prior art IC card that an IC device is not mounted on the module 1 at the portion of an opening 12a of the frame member 2b and an opening 13a of the spacer member 2a. However, the number of IC devices to be mounted on the module 1 is ordinarily large so that the openings 12a and 13a are generally standardized by allowing a considerable area in order to be able to deal with IC cards of various types. Accordingly, when IC devices are absent on the module 1 at the portion of the openings 12a and 13a, additional spacer pieces 5a and 5b are inserted to the positions 21a and 21b, respectively, on the module 1.

As is clear from the constitution shown in the drawings, it is necessary in the IC card according to the prior art to dispose additional spacer pieces 5a and 5b, besides the spacer member 2a, on the module 1 so that the number of required metallic molds is correspondingly increased. Moreover, additional working manhours are required for the positioning of the additional spacer pieces 5a and 5b. Therefore, the cost for the IC card is accordingly raised.

To summarize, with the structure of the spacer number in the IC card according to the prior art, it is necessary to prepare also metallic molds for the additional spacer pieces, in addition to the metallic mold for manufacturing the spacer members. If it is desired to integrated the additional spacer pieces into the main body of the spacer member, as many metallic molds for manufacture of the spacer members as there are different types of IC cards have to be prepared. Accordingly, the cost for manufacturing the IC card including the spacer members and the additional spacer pieces is increased correspondingly.

### BRIEF CONTENT OF THE INVENTION

### Object of the Invention

It is therefore an object of the invention to provide an IC card which includes a spacer member that can flexibly conform with a type of IC card that includes IC devices as well as a type of IC card that does not include IC devices as long as the positions and the sizes of the IC devices that are to be arranged on the surface of the module are in conformity with the standard specifications, by which it is possible to reduce the number of metallic molds required for the manufacture of the spacer member to just one.

### Summary of the Invention

In accordance with the present invention, there is provided an IC card according to claim 1 and obtainable by the method defined in claim 3.

The spacer member of the IC card according to the invention is provided with discontinuous slits so as to make it possible to form openings with predetermined dimensions at predetermined locations on the module. Therefore, it is possible to easily deal with both types of IC cards of the case where there exist predetermined IC devices at predetermined locations of the module and the case where there do not exist such IC devices, by deciding whether or not to form continuous slits by removing the bridging discontinuous spots of the slits. Accordingly, the need for two or more metallic molds for spacer manufacture which was indispensable in the prior art can be obviated, and the positional adjustment for the additional spacer pieces can be made unnecessary, reducing the cost of manufacturing the IC card to the corresponding extent.

### BRIEF DESCRIPTION OF THE DRAWINGS

The above-mentioned and other objects, features, and advantages of this invention will become more apparent by reference to the following detailed description of the invention taken in conjunction with the drawings, wherein:
Figs. 1A, 1B, and 1C are a plan view, a Y-Y sectional view, and an exploded perspective view of a multifunctional IC card according to the prior art;
Figs. 2A, 2B, 2C, and 2D are a plan view, a Y-Y' sectional view, an exploded perspective view and a partial plan view of the first embodiment of the invention; and
Fig. 3 is an exploded perspective view of a second embodiment of the invention similar to Figs. 2A, 2B, and 2C.

### DETAILED DESCRIPTION OF THE PREFERRED EMBODIMENTS

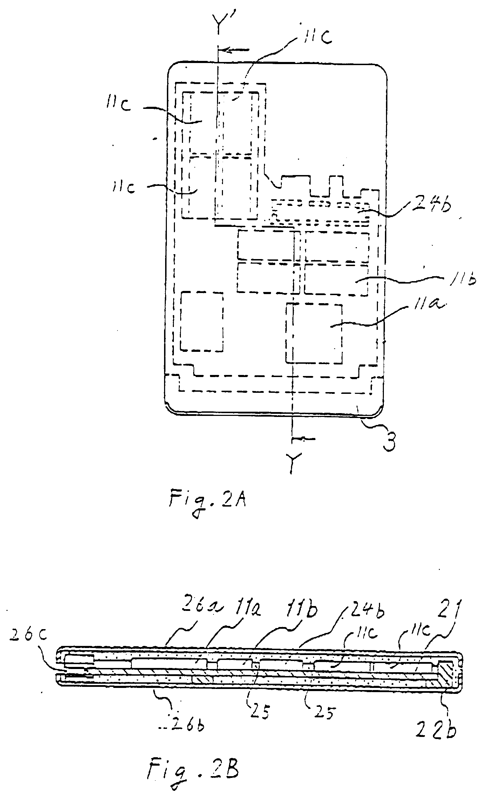

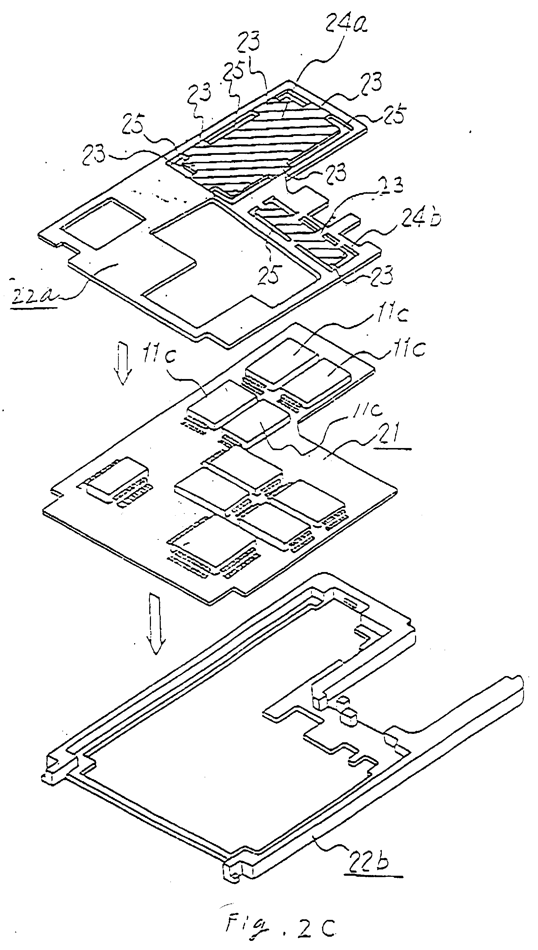

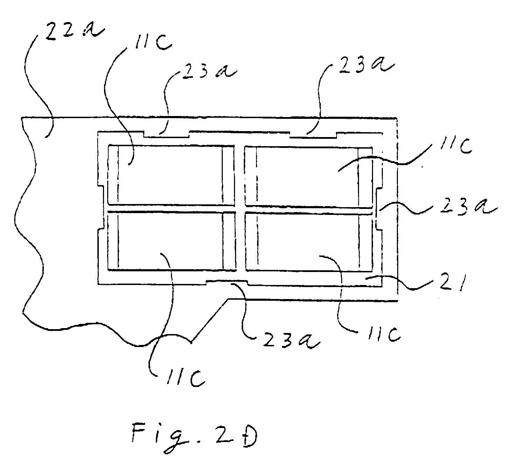

Referring to Figs. 2A to 2D, the first prefered embodiment of the present invention is constructed by stacking a module 21 having printed circuits on the surface thereof and has a plurality of IC devices 11a and 11b such as memories and a microprocessor, a frame member 22b for reinforcing the mechanical strength of the module 21, and a spacer member 22a which fills the areas not occupied by the IC devices in the upper space of the module 21 to a height substantially equal to that of the IC devices, then covering the laminate with housing members 26a and 26b from above and from below. The indentations in the thickness direction of the frame member 22b have the same size as the outside size of the module 21 so as to be able to accommodate the module 21 in it. A printed circuit layer (not shown) at one end of the module 21 extends from the inside of the card toward a slit 26c formed by the housing members 26a and 26b, and forms via the hole 26c a connector terminal between a connector on the side of an IC card reading head (not shown) to which the card is inserted.

As shown in Fig. 2C, the first embodiment of the invention is constructed by fitting a module 21 to the indentations of a frame member 22b, stacking a spacer member 22a on top of it, and accommodating the laminate in housing members 26a and 26b. The spacer member 22a has slits 25 which include bridging parts 23 provided at appropriate intervals so as to be readily possible to form standardized openings at standardized locations. When IC devices 11c are to be arranged at a surface portion of the module 21 that faces a region 24a (hatched region) defined by the slits 25 as in the example shown in the figure, the region 24a is removed by cutting the bridging parts 23 so as to form an opening that surrounds the IC devices. A plan view of the state in which the region 24a is removed and the spacer member 22a is fitted in the circumference of the IC devices 11c is shown in Fig. 2D. In the figure the protrusions 23a are the remains that are formed by cutting the bridging parts 23 off. Since the IC device is absent at location corresponding to the surface of the module 21 as shown in the figure, a region 24b similar to the region 24a is used as a spacer in the state as is (that is, without cutting off the bridging parts 23). The cutting of the bridging parts 23 is performed by using an ordinary tool, but care should be exercised to make the remains 23a sufficiently small to avoid contact with the IC devices.

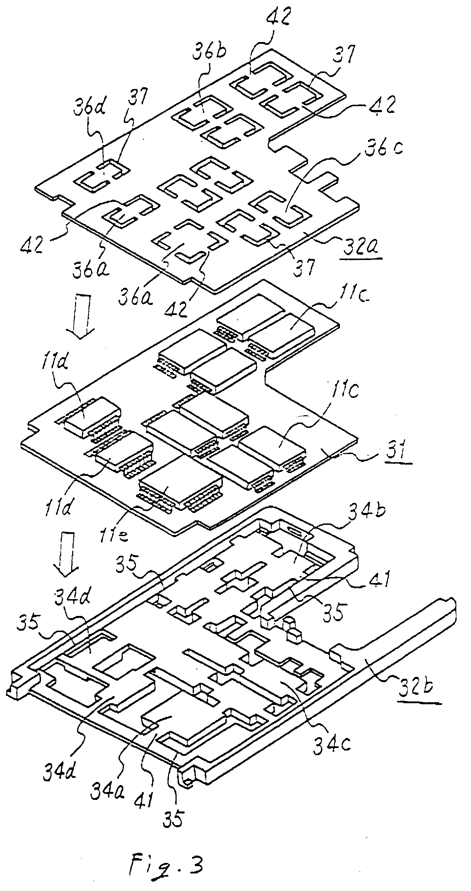

Next, referring to FIG. 3, the second embodiment of the IC card according to the invention shown in the figure has a spacer member 32a provided with slits 37 so as to define openings that correspond to the respective ones of the IC device that have standardized dimensions to be arranged at standardized locations on the module 31. Since the relationship among a frame member 32b, the module 31 to be accommodated in the indentations of the member 32b, and the spacer member 32a to be arranged on top of it is the same as the relationship among the frame member 22b, the module 21, and the spacer member 22a in the first embodiment, no further explanation will be given. As indicated in FIG. 3, each of the slits 37 has bridging parts 42 that are provided at appropriate intervals and these bridging parts 42 are selectively cut in response to the presence or absence of IC devices 11c to 11e at corresponding locations on the module 31 to form openings which will be in fitted relation with these IC devices. The frame member 32b is also provided with slits 35 that define openings situated at locations corresponding to the connection terminal trains of these IC devices 11c to 11e and the connection terminal trains are accommodated by selectively cutting the bridging parts 41 in response to the presence or absence of the IC devices 11c to 11e. In this embodiment the surface portions of the frame member 32a corresponding to the surface portions of the module 31 where same of the IC devices 11c to 11e are not mounted do not have openings so that the reinforcing effect of the module 31 by the frame member 32a will be enhanced in proportion to that.

As described above, the spacer member of the IC card according to the invention is manufactured using a single metallic mold from the very beginning, and is constructed so as to selectively form openings by selectively cutting the bridging parts of the slits that are formed in advance, in response to the presence or absence of IC devices of predetermined size at predetermined locations on the module. Therefore, it is possible to reduce the manufacturing cost of the IC card. Moreover, the bridging parts that are left without being cut keep the spacer member in the shape as it is, so that the reinforcing effect for the module will be enhanced correspondingly.

Although the invention has been described with reference to specific embodiments, this description is not intended to restrict the scope of the invention, said scope being defined only by the claims.

## Claims

1. An IC-card comprising:
a module (21, 31) which includes a printed substrate defining predetermined locations for IC-devices, and a plurality of IC-devices (11a, 11b, 11c, 11d, 11e) occupying at least part of said locations and connected electrically to said printed circuit substrate,
a frame member (22b, 32b) which is arranged surrounding the circumference of said module (21, 31),
a spacer member (22a, 32a) stacked over said module (21, 31) and being formed as a plate having at least one opening to accomodate at least one IC-device, and a housing member (26a,26b) for covering from outside the stack of said module frame member and spacer member,
**characterized** in that said spacer member (21, 31) has at least one spacer region (24a, 24b, 36a, 36b, 36c, 36d) surrounded by slits (25, 37) and connected by bridging parts (23, 42) to the remainder of the spacer member (21, 31), said spacer region being formed to correspond at least to one of said predetermined locations which is not occupied by IC-devices and said spacer region being selectively removable by severing said bridging parts (23, 42) to form an opening if an IC-device is present at said location.

2. An IC-card as claimed in claim 1, wherein said frame member (32b) has a plate-shaped plane part extending substantially parallel to said module, said plane part having at least one plane portion (34a,34b,34c,34d) surrounded by slids (35) and connected by bridging parts (41) to the remainder of the frame member (32b), said portion (34a,34b,34c,34d) being formed to correspond to at least one of said predetermined locations of the module which are not occupied by IC-devices and that portion being selectively removable by severing said bridging parts (41) to form an opening if an IC-device is present at that location.

3. A method of manufacturing an IC-card of the kind defined in claim 1 or 2, which comprises the steps of
stacking a spacer member (22a,32a) on a module having a printed circuit substrate defining predetermined locations for mounting IC-devices with electrical connection to said printed circuit, and
covering said module (21,31) and said spacer member (22a,32a) with housing member (26a,26b) from above and from below, characterized by the further step of cutting off predetermined bridging parts (23,32) which connect spacer regions (24a,24b,36a,36b,36c,36d) in said spacer member to the remainder of the spacer member, so as to remove at least one of said spacer regions to form an opening corresponding to a location occupied by an IC-device on said module.

## Patentansprüche

1. IC-Karte mit
einem Modul (21, 31), der ein gedrucktes Substrat, welches vorgegebene Plätze für IC-Vorrichtungen definiert, und eine Anzahl von IC-Vorrichtungen (11a, 11b, 11c, 11d, 11e), die mindestens einen Teil der Plätze einnehmen und elektrisch mit dem gedruckten Schaltungssubstrat verbunden sind, aufweist,
einem Rahmenelement (22b, 32b), welches den Umfang des Moduls (21, 31) umgibt,
einem Abstandshalterelement (22a, 32a), das über den Modul (21, 31) gestapelt und als Platte ausgebildet ist mit mindestens einer Öffnung zur Aufnahme mindestens einer IC-Vorrichtung, sowie einem Gehäuseelement (26a, 26b), das den Stapel aus dem Modulrahmenelement und dem Abstandshalterelement von außen abdeckt,
dadurch **gekennzeichnet,** daß das Abstandshalterelement (21, 31) mindestens einen Abstandshalterbereich (24a, 24b, 36a, 36b, 36c, 36d) aufweist, der von Schlitzen (25, 37) umgeben und durch Brückenteile (23, 42) mit dem Rest des Abstandshalterelements (21, 31) verbunden ist, wobei der Abstandshalterbereich so geformt ist, daß er mindestens einem der vorgegebenen Plätze entspricht, der nicht von IC-Vorrichtungen besetzt ist, und wobei der Abstandshalterbereich wahlweise entfernbar ist durch Durchtrennen der Brückenteile (23, 42) zur Bildung einer Öffnung, wenn an dem Platz eine IC-Vorrichtung vorhanden ist.

2. IC-Karte nach Anspruch 1,
bei der das Rahmenelement (32b) einen plattenförmigen ebenen Teil aufweist, der im wesentlichen parallel zu dem Modul verläuft, wobei der ebene Teil mindestens einen ebenen Teil (34a, 34b, 34d) aufweist, der von Schlitzen (35) umgeben und durch Brückenteile (41) mit dem Rest des Rahmenelements (32b) verbunden ist, wobei der Teil (34a, 34b, 34c) so ausgebildet ist, daß er mindestens einem der vorgegebenen Plätze des Moduls entspricht, die nicht von IC-Vorrichtungen besetzt sind, und daß dieser Teil wahlweise entfernbar ist durch Durchtrennen der Brückenteile (41) zur Bildung einer Öffnung, wenn eine IC-Vorrichtung an dem Platz vorhanden ist.

3. Verfahren zum Herstellen einer IC-Karte der im Anspruch 1 oder 2 angegebenen Art, mit den Schritten:
Anordnen eines Abstandshalterelements (22a, 32a) über einem Modul, der ein gedrucktes Schaltungssubstrat hat, welches vorgegebene Plätze zum Montieren von IC-Vorrichtungen mit elektrischer Verbindung mit der gedruckten Schaltung aufweist, und
Abdecken des Moduls (21, 31) und des Abstandshalterelements (22a, 32a) mit einem Gehäuseelement (26a, 26b) von oben und unten, **gekennzeichnet** durch den weiteren Schritt des Wegschneidens von vorgegebenen Brückenteile (23, 32), die Abstandshalterbereiche (24a, 24b, 36a, 36b, 36c, 36d) in dem Abstandshalterelement mit dem Rest des Abstandshalterelements verbinden, um so mindestens einen der Abstandshalterbereiche zu entfernen und dadurch eine Öffnung zu bilden, die einem von einer IC-Vorrichtung besetzten Platz auf dem Modul entspricht.

## Revendications

1. Carte à circuits intégrés comprenant :
un module (21, 31) qui inclut un substrat imprimé définissant des emplacements prédéterminés pour des dispositifs à circuits intégrés et une pluralité de dispositifs à circuits intégrés (11a, 11b, 11c, 11d, 11e) occupant au moins une partie desdits emplacements et connectés électriquement audit substrat de circuit imprimé ;
un élément de cadre (22b, 32b) qui est agencé de manière à entourer la circonférence dudit module (21, 31) ;
un élément d'espaceur (22a, 32a) empilé sur ledit module (21, 31) et formé en tant que plaque comportant au moins une ouverture pour recevoir au moins un dispositif à circuits intégrés ; et
un élément de boîtier (26a, 26b) pour recouvrir depuis l'extérieur l'empilement constitué par ledit élément de cadre de module et ledit élément d'espaceur,
caractérisée en ce que ledit élément d'espaceur (21, 31) comporte au moins une région d'espaceur (24a, 24b, 36a, 36b, 36c, 36d) entourée par des fentes (25, 37) et connectée par des parties de pontage (23, 42) au reste de l'élément d'espaceur (21, 31), ladite région d'espaceur étant formée de manière à correspondre à au moins l'un desdits emplacements prédéterminés qui n'est pas occupé par des dispositifs à circuits intégrés et ladite région d'espaceur pouvant être ôtée sélectivement en rompant lesdites parties de pontage (23, 42) afin de former une ouverture si un dispositif à circuits intégrés est présent au niveau dudit emplacement.

2. Carte à circuits intégrés selon la revendication 1, dans laquel le ledit élément de cadre (32b) comporte une partie plane en forme de plaque s'étendant sensiblement parallèlement audit module, ladite partie plane comportant au moins une partie plane (34a, 34b, 34c, 34d) entourée par des fentes (35) et connectée par des parties de pontage (41) au reste de l'élément de cadre (32b), ladite partie (34a, 34b, 34c, 34d) étant formée de manière à correspondre à au moins l'un desdits emplacements prédéterminés du module qui ne sont pas occupés par des dispositifs à circuits intégrés et cette partie pouvant être ôtée sélectivement en rompant lesdites parties de pontage (41) pour former une ouverture si un dispositif à circuits intégrés est présent au niveau de cet emplacement.

3. Procédé de fabrication d'une carte à circuits intégrés du type défini dans la revendication 1 ou 2, lequel comprend les étapes de :
empilement d'un élément d'espaceur (22a, 32a) sur un module comportant un substrat de circuit imprimé définissant des emplacements prédéterminés pour monter des dispositifs à circuits intégrés avec connexion électrique sur ledit circuit imprimé ; et
recouvrement dudit module (21, 31) et dudit élément d'espaceur (22a, 32a) à l'aide d'un élément de boîtier (26a, 26b) depuis le dessus et depuis le dessous,
caractérisé par l'étape supplémentaire de découpe de parties de pontage prédéterminées (23, 32) qui connectent les régions d'espaceur (24a, 24b, 36a, 36b, 36c, 36d) dans ledit élément d'espaceur au reste de l'élément d'espaceur de manière à ôter au moins l'une desdites régions d'espaceur pour former une ouverture correspondant à un emplacement occupé par un dispositif IC sur ledit module.
